# EUROPÄISCHE PATENTSCHRIFT

(11) **EP 0 882 916 B1**
(45) Veröffentlichungstag und Bekanntmachung des Hinweises auf die Patenterteilung: **12.09.2001**
(21) Anmeldenummer: 98109977.3
(22) Anmeldetag: 02.06.1998
(51) Int. Cl.: F16K 1/46, F16K 1/42

(54) **Ventilanordnung**
Valve assembly
Ensemble de soupapes

(30) Priorität: 06.06.1997 DE 19723993; 06.06.1997 DE 19723986
(43) Veröffentlichungstag der Anmeldung: 09.12.1998
(73) Patentinhaber: ARCA REGLER GmbH, D-47918 Tönisvorst (DE)
(72) Erfinder: Nägel, Heinz M., Dipl. Ing., 54550 Daun (DE)
(74) Vertreter: Paul, Dieter-Alfred, Dipl.-Ing.

(56) Entgegenhaltungen:
- DE-B- 1 048 454
- DE-B- 1 142 482
- DE-B- 1 152 857
- DE-U- 9 320 564
- FR-A- 2 742 206
- US-A- 2 485 092
- US-A- 2 645 449
- US-A- 3 428 076
- US-A- 3 583 426

## Beschreibung

Die vorliegende Erfindung betrifft eine Ventilanordnung mit einem Ventilgehäuse, das einen sich zwischen einer Einlaßöffnung und einer Auslaßöffnung erstreckenden Durchflußkanal aufweist, und mit einer Sperreinrichtung zum Schließen des Durchflußkanals, die einen den Durchflußkanal umgebenden Ventilsitz und einen Ventilkegel, der in einer Axialrichtung quer zum Ventilsitz zwischen einer geöffneten und einer geschlossenen Ventilstellung bewegbar ist und mit dem Ventilsitz in der Weise korrespondiert, daß Dichtflächen am Ventilkegel und Ventilsitz in der geschlossenen Ventilstellung metallisch dichtend in Anlage kommen und so den Durchflußkanal verschließen, aufweist, wobei zwischen Ventilsitz und Ventilkegel eine weichdichtende Dichtungsanordnung angeordnet ist, die in der geschlossenen Ventilstellung zusätzlich zu der durch die Dichtflächen bewirkten metallischen Dichtung wirksam ist und ein am Ventilsitz gehaltenes und als Ringscheibe ausgebildetes Dichtelement aufweist, das so positioniert ist, daß der Ventilkegel bei einem Schließvorgang an dem Dichtelement in Anlage kommt, bevor die geschlossene Ventilstellung erreicht ist, und beim weiterem Schließvorgang das Dichtelement entgegen einer elastischen Rückstellkraft in Richtung des Ventilsitzes drückt.

Eine derartige Ventilanordnung ist z.B. aus der US-A-2485092 bekannt. Ventilanordnungen dieser Art, die insbesondere als Regelventile ausgebildet sind, können je nach Einsatzgebiet unterschiedlich ausgebildet sein, wobei sie sich insbesondere in der Ausführung der Dichtflächen unterscheiden. Zum einen können die Dichtflächen unterschiedlich gestaltet sein, wobei sie in der Regel kegelförmige Dichtflächen aufweisen. Es sind jedoch auch Ausführungsformen bekannt, bei denen die Dichtflächen plan aufeinanderliegen.

Weiterhin werden je nach Art der Beanspruchung auch unterschiedliche Materialien für die Dichtflächen verwendet. Bei mäßiger Beanspruchung, wo auch weichdichtende Kegel eingesetzt werden können, werden die Dichtkanten nicht besonders geschützt. Bei mittlerer Beanspruchung werden die Dichtkanten stelittiert, und bei hohen Anforderungen wird die gesamte Kontur gepanzert. Bei besonders hohen Anforderungen können Innengarnituren aus Keramik, Hartmetall oder gehärteten Werkstoffen ausgeführt werden.

Im Rahmen der vorliegenden Erfindung ist dabei der Begriff "metallisch dichtend" im Unterschied zu sogenannten weichdichtenden Anordnungen zu verstehen und insbesondere nicht auf die Verwendung von metallischen Materialien beschränkt, sondern umfaßt auch Anordnungen, bei denen die Dichtflächen aus anderen Hartmaterialien wie beispielsweise Keramik ausgebildet sind und auch sogenannte metallisch geschliffene Dichtungen.

Insbesondere im Kraftwerksbereich oder in Chemieanlagen ist es erforderlich, den Leckdurchfluß, d.h. die Durchflußmenge, die bei geschlossenem Ventil zwischen Ventilsitz und Ventilkegel sowie zwischen Ventilsitz und Gehäuse durchströmt, so gering wie möglich zu halten. Häufig ist sogar gefordert, daß der Leckdurchfluß gleich Null ist. Dieser Anforderung kann nach längerer Betriebsdauer oftmals nicht mehr entsprochen werden, da die Dichtflächen zu Teil sehr starken Beanspruchungen durch Erosion, Abrasion, Kavitation etc. ausgesetzt sind, so daß es erforderlich wird, die Dichtflächen nachzuarbeiten. Dies stellt jedoch eine aufwendige Prozedur dar und kann insbesondere auch zu ungewollten Stillständen der Anlage, in die sie eingebaut sind, führen.

Aufgrund dieser Problematik wird in den US-Psen 2,645,449 und 2,485,092 vorgeschlagen, zusätzlich zu der metallischen Dichtung eine Weichabdichtung zwischen Ventilsitz und Ventilkegel vorzusehen, die in der geschlossenen Ventilstellung zusätzlich zu der metallischen Dichtung wirksam ist. Hierzu ist ein elastisches Dichtungselement vorgesehen, das beim Schließvorgang der Ventilanordnung relativ stark verformt wird. Durch die dabei auftretenden Scherkräfte kann es bei häufigem Öffnen und Schließen der Ventilanordnung zu Beschädigungen des Dichtungselements kommen mit der Folge, daß das Dichtungselement ausgewechselt werden muß.

Aus der US-PS 3,428,076 ist eine weitere Ventilanordnung bekannt, bei der neben einer metallischen Dichtung eine Weichabdichtung vorgesehen ist. Auch bei dieser Ausführungsform erfolgt die Weichabdichtung, indem ein elastisches Dichtungselement beim Schließvorgang durch den Ventilkörper starken Verformungen ausgesetzt ist, die zu Beschädigungen des Dichtungselements führen können.

Bei einer weiteren bekannten Ventilanordnung (US-PS 3,583,426) erfolgt die Weichabdichtung durch ein Dichtungselement, das beim Schließvorgang durch den Ventilkegel entgegen der Rückstellkraft von Federelementen axial gegenüber dem Ventilsitz verschoben wird. Hierbei treten zwar nicht wie bei den beiden zuvor beschriebenen Ausführungsformen starke Verformungskräfte auf, jedoch ist das Dichtungselement bei der Axialverschiebung ebenfalls Reibungskräften ausgesetzt, die bei längerem Gebrauch zu Beschädigungen des Dichtungselments an dessen Außenseite führen können, so daß es an den eigentlichen Dichtungsflächen vorbei zu Leckageströmen kommen kann.

Aufgabe der Erfindung ist es daher, eine Ventilanordnung der eingangs genannten Art so auszubilden, daß auch nach längeren Betriebszeiten noch zuverlässig Leckagen vermieden werden könneh.

Diese Aufgabe ist im wesentlichen dadurch gelöst, daß das Dichtelement aus einem eine geringe Elastizität aufweisenden Material ausgebildet ist, im Bereich seines äußeren Randes an dem Ventilsitz gehalten ist und im Bereich seines inneren Randes durch wenigstens ein elastisches Element am Ventilsitz abgestützt ist.

Vorzugsweise wird ein Dichtelement aus einem PTFE-Material verwendet, das sehr gute Dichtungseigenschaften besitzt und sehr beständig ist. Die Verwendung einer Ringscheibe aus PTFE hat außerdem den Vorteil, daß die Ringscheibe beidseitig verwendbar ist.

Als elastisches Element kann beispielsweise ein Federelement oder ein O-Ring aus einem Elastomermaterial verwendet werden, das in einer Ringnut im Ventilsitz gehalten ist.

In Ausgestaltung der Erfindung ist vorgesehen, daß der Ventilsitz in eine Ausnehmung des Ventilgehäuses lose eingelegt und positioniert ist und axial durch eine Spanneinrichtung fixiert ist, die beim Spannen im wesentlichen nur Axialkräfte auf den Ventilsitz ausübt. Somit wird erfindungsgemäß der Ventilsitz indirekt in dem Ventilgehäuse axial fixiert, wobei im wesentlichen nur Axialkräfte auf den Ventilsitz wirken. Es hat sich gezeigt, daß durch eine solche indirekte Fixierung des Ventilsitzes über eine separate Spanneinrichtung der Einbau und Ausbau des Ventilsitzes erheblich erleichtert werden kann, und insbesondere durch eine rein axial wirkende Spanneinrichtung die Vorspannung wesentlich exakter eingestellt werden kann, als es bei den herkömmlichen Schraubgewindeventilkonstruktionen der Fall war. Dadurch können radiale Deformationen an der Dichtfläche durch übermäßiges Vorspannen des Ventilsitzes vermieden werden.

In Ausbildung dieser Ausführungsform ist vorgesehen, daß die Spanneinrichtung ein Distanzelement, insbesondere ein Distanzrohr, aufweist, welches im Kraftnebenschluß durch ein am Ventilgehäuse anliegendes und fixiertes Bauteil axial gegen den Ventilsitz gedrückt wird. Diese Ausbildung hat den Vorteil, daß durch festgelegte Einbauräume und Distanzelemente mit einer vorgegebenen Länge auf einfache Weise eine definierte Vorspannkraft erzeugt werden kann, und zwar unabhängig davon, mit welchem Drehmoment das Bauteil am Ventilgehäuse fixiert ist. Die Vorspannkraft hängt allein von dem Längenunterschied zwischen den im Kraftfluß vorgesehenen Bauteilen einerseits und dem zur Verfügung stehenden Platz andererseits ab und kann entsprechend durch Auswahl eines entsprechenden Distanzelements genau bestimmt werden.

Nach einer bevorzugten Ausführungsform wird das Distanzelement über Zwischenschaltung eines Verschlußdeckels, in dem der Ventilkegel über eine Ventilstange axial geführt ist, gegen den Ventilsitz gespannt.

Schließlich kann bei der Ventilanordnung gemäß der vorliegenden Erfindung der nur lose in das Ventilgehäuse eingelegte Ventilsitz symmetrisch zu seiner senkrecht zur Axialrichtung des Ventilkegels gelegenen Mittelebene ausgebildet sein. Dies bietet den Vorteil, daß der Ventilsitz bei Undichtigkeiten nur umgedreht zu werden braucht, um eine neue Dichtfläche zu erhalten.

Hinsichtlich weiterer vorteilhafter Ausgestaltungen und Weiterbildungen der Erfindung wird auf die nachfolgende Beschreibung eines Ausführungsbeispiels unter Bezugnahme auf die beiliegende Zeichnung verwiesen. In der Zeichnung zeigt:
- Figur 1: in teilweise geschnittener Seitenansicht eine Ventilanordnung gemäß der vorliegenden Erfindung in geöffneter Ventilstellung,
- Figur 2: in teilweise geschnittener Seitenansicht die Ventilanordnung aus Figur 1 in geschlossener Ventilstellung,

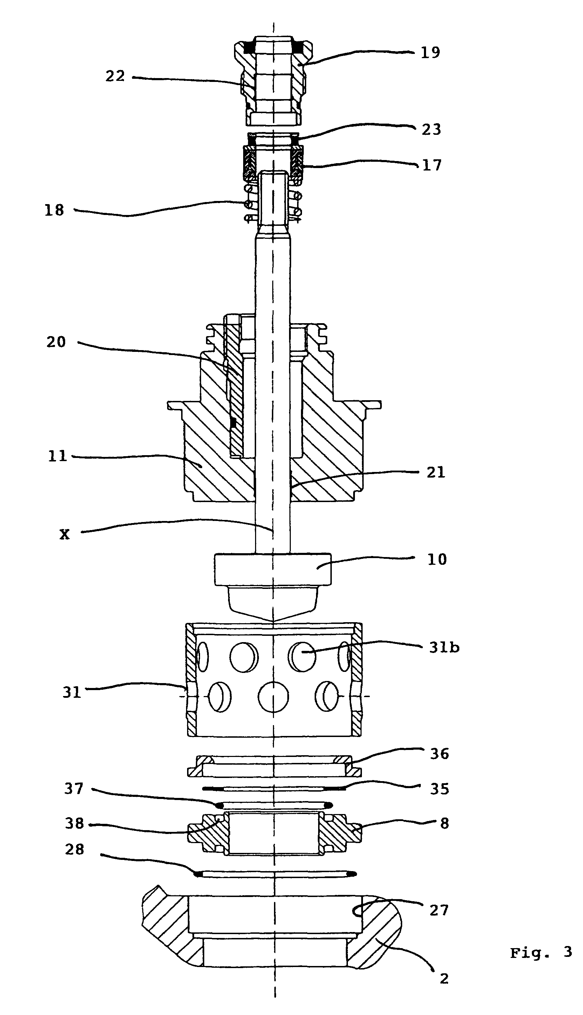

- Figur 3: die erfindungswesentlichen Bauteile der Ventilanordnung aus Figur 1 in einer Explosionsansicht,
- Figur 4: eine vergrößete Detaildarstellung von Ventilsitz und Ventilkegel in geöffneter Ventilstellung und
- Figur 5: eine vergrößerte Detaildarstellung von Ventilsitz und Ventilkegel in geschlossener Ventilstellung.

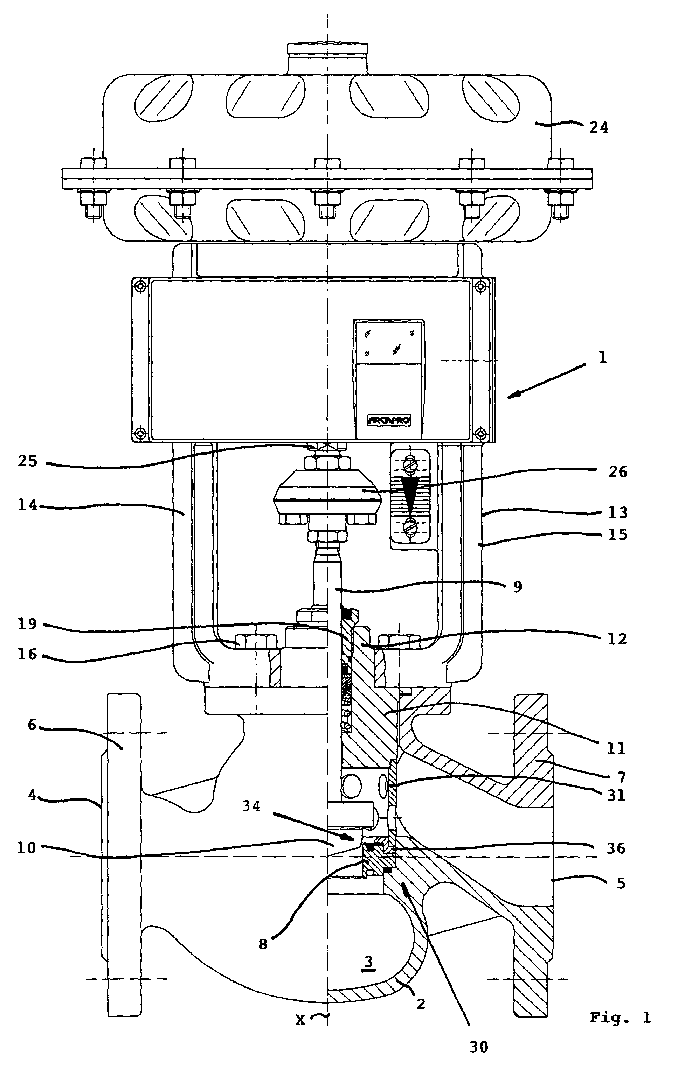

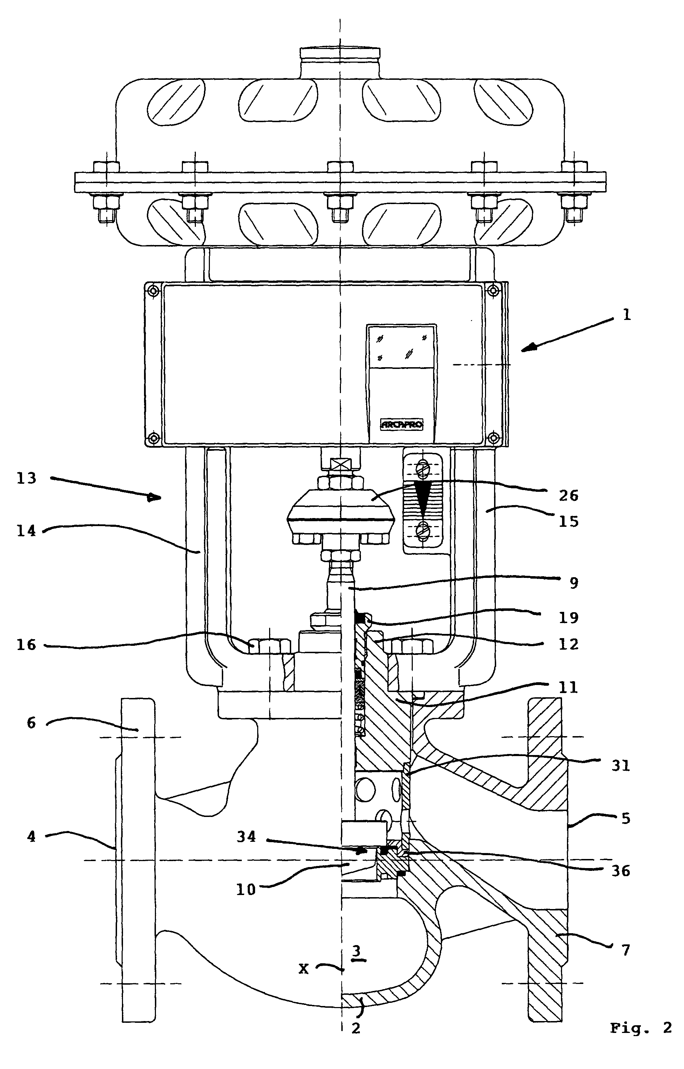

In den Figuren 1 und 2 ist eine als Regelventil 1 ausgebildete Ventilanordnung gemäß der vorliegenden Erfindung dargestellt. Das Regelventil 1 hat ein Ventilgehäuse 2, in dem sich ein Durchflußkanal 2 zwischen einer Einlaßöffnung 4 und einer Auslaßöffnung 5 des Ventilgehäuses 2 erstreckt. Mit Hilfe von Befestigungsflanschen 6, 7, die um die Einlaßöffnung 4 und die Auslaßöffnung 5 herum angeordnet sind, kann das Regelventil 1 zwischen die Enden zweier Rohre und damit in ein Rohrleitungssystem eingebaut werden. Der Durchflußkanal 3 dient dann dem Durchfluß des zu steuernden Mediums.

Im Ventilgehäuse 2 ist ein waagrecht angeordneter Ventilsitz 8 eingebaut, durch den der Durchflußkanal 3 hindurch geht. Konzentrisch um Ventilsitz 8 erstreckt sich nach oben eine Ventilstange 9, deren unteres Ende als Ventilkegel 10 ausgebildet ist. Der Ventilkegel 10 korrespondiert mit dem Ventilsitz 8 in der Weise, daß der Ventilkegel 10 in seiner untersten Stellung auf dem Ventilsitz 8 aufsitzt und damit den Durchflußkanal 3 in einer später noch näher beschriebenen Weise verschließt. Die Ventilstange 9 ist in einem Verschlußdeckel 11 geführt, welcher den Durchflußkanal 3 obenseitig abschließt und mit dem Ventilgehäuse 2 abdichtend verschraubt ist. Der Verschlußdeckel 11 hat einen nach oben vorstehenden Fortsatz 12, welcher der Zentrierung eines Jochs 13 mit den sich vertikal erstreckenden Jochstreben 14, 15 dient. Das Joch 13 ist mit dem Ventilgehäuse 2 durch Spannschrauben 16 in einer noch beschriebenen Weise fixiert.

Der Verschlußdeckel 11 bildet zwischen seiner Innnenwandung und der Außenseite der Ventilstange 9 einen zylindrischen Hohlraum, in den eine Spindelabdichtung 17 wie ein PTFE-V-Ring oder eine Stoffbuchsenpackung eingesetzt und axial vorgespannt zwischen einer Schraubenfeder 18 und einer Schraube 19 gehalten ist. Die Schraube 19 ist dabei in eine Edelstahlhülse 20 eingeschraubt, welche wiederum in den Verschlußdeckel 11 eingeschraubt ist und sich zwischen Verschlußdeckel 11 und Spindelabdichtung 17 erstreckt. Die Verspannung ist so getroffen, daß einerseits eine gute Abdichtung und andererseits eine noch hinreichende Gleitfähigkeit der Ventilstange 9 gewährleistet ist.

Zwischen der Ventilstange 9 und dem Verschlußdeckel 11 einerseits und der Ventilstange 9 und der Schraube 19 andererseits sind weiterhin wartungsfreie Dichtungselemente 21, 22 vorgesehen. Außerdem ist ein Feinabdichtungselement 23 zwischen Spindelabdichtung 17 und Stoffbuchsschraube 19 angeordnet.

Am oberen Ende des Jochs 13 ist ein Stellantrieb 24 in Form eines Membranstellmotors angeordnet, der eine Antriebsstange 25 betätigt, welche mit dem oberen Ende der Ventilstange 9 über eine Kupplung 26 verbunden ist, so daß die Ventilstange 9 über den Stellantrieb 24 axial zwischen der in Figur 1 dargestellten geöffneten Ventilstellung und der in Figur 2 dargestellten geschlossenen Ventilstellung verstellt werden kann.

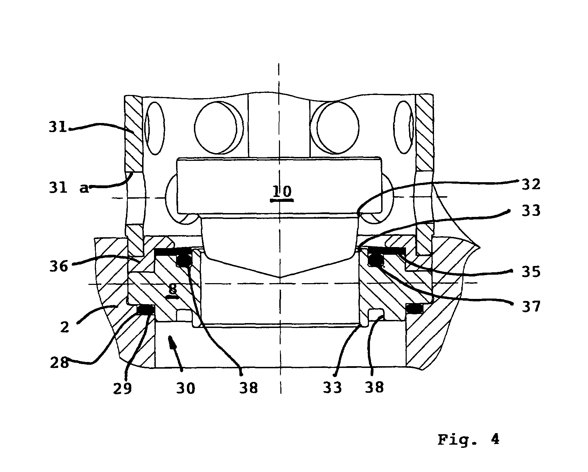

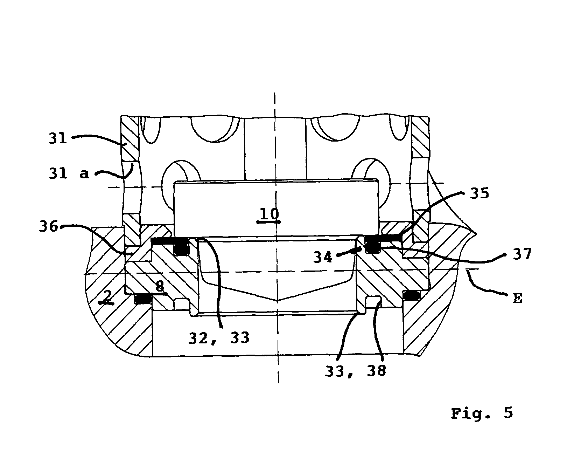

In den Figuren 4 und 5 ist die Konstruktion der Ventilanordnung im Bereich des Ventilsitzes 8 im einzelnen dargestellt.Der Ventilsitz 8 ist ringförmig ausgebildet und in eine Ausnehmung 27 des Ventilgehäuses lose eingelegt und wird in dieser Ausnehmung 27 radial positioniert. Zwischen Ventilsitz 8 und Ventilgehäuse 2 ist ein Dichtungsring 28 angeordnet, der in eine Nut 29 in der Ausnehmung 27 eingelegt ist. Axial ist der Ventilsitz 8 durch eine Spanneinrichtung 30 in der Ausnehmung 27 fixiert. Die axiale Festlegung erfolgt dabei über ein Distanzrohr 31, welches im Kraftnebenschluß durch das am Ventilgehäuse 2 anliegende und festgeschraubte Joch 13 unter Zwischenschaltung des Verschlußdeckels 11 gegen den Ventilsitz 8 gespannt ist. Durch diese Anordnung wird gewährleistet, daß bei der Fixierung des Ventilsitzes 8 keine Radialkräfte auf den Ventilsitz 8 wirken, und außerdem kann über entsprechende Dimensionierung der im Kraftfluß befindlichen Bauteile die Spannkraft exakt eingestellt werden.

Der Ventilsitz 8 weist an seiner dem Ventilkegel 10 zugewandten Innenkante eine Dichtfläche 33 auf, die mit einer entsprechenden Dichtfläche 32 am Ventilkegel 10 in der in Figur 5 dargestellten geschlossenen Ventilstellung metallisch dichtend in Anlage kommt, um den Durchflußkanal 3 zu verschließen.

Zusätzlich ist zwischen Ventilsitz 8 und Ventilkegel 10 eine weichdichtende Dichtungsanordnung 34 vorgesehen, die in der geschlossenen Ventilstellung zusätzlich zu der metallischen Dichtung wirksam ist. Die weichdichtende Dichtungsanordnung wird durch eine Ringscheibe 35 aus PTFE (Teflon) gebildet, die an ihrem äußeren Rand durch einen Klemmring 36, der zwischen Ventilsitz 8 und Distanzrohr 31 fixiert ist, am Ventilsitz 8 festgeklemmt ist und in seinem innenliegenden Bereich durch einen O-Ring 37 aus einem elastomeren Material, welcher in eine Ringnut 38 in dem Ventilsitz 8 eingelegt ist, abgestützt wird.

Wie in Figur 4 erkennbar ist, ist die Ringscheibe 35 so ausgebildet, daß ihre zum Ventilkegel 10 weisende Innenkante über den Ventilsitz 8 vorsteht, so daß der Ventilkegel 10 bei einem Schließvorgang zunächst mit dieser Innenkante in Berührung kommt und die Ringscheibe 35 beim weiteren Schließen entgegen der elastischen Rückstellkraft des O-Rings 37 nach unten drückt, so daß in der in Figur 5 gezeigten geschlossenen Ventilstellung die Ringscheibe 35 und der Ventilkegel 10 flächig aneinander anliegen. So wird um die metallischen Dichtflächen 32 und 33 herum der Ringspalt zwischen Ventilsitz 8 und Ventilkegel 10 weichdichtend verschlossen. Da der Ventilkegel 10 im wesentlichen im Bereich der metallischen Dichtung an dem Ventil 8 abgestützt ist, wird die PTFE-Ringscheibe 35 nicht über die zulässige Flächenpressung belastet, so daß sie sehr haltbar ist. Wenn die Ventilanordnung wieder in die geöffnete Ventilstellung gebracht wird, wird die PTFE-Ringscheibe 35 durch die Rückstellkraft des O-Rings 37 wieder in die in Figur 4 gezeigte Lage gebracht.

Wenn dennoch Verschleiß an der Ringscheibe 35 auftreten sollte, kann sie in einfacher Weise gewendet werden.

Wie in den Figuren 4 und 5 deutlich erkennbar ist, ist der Ventilsitz 8 in Bezug auf seine senkrecht zur Achse X liegenden Mittelebene E symmetrisch ausgebildet. Dies hat den Vorteil, daß der Ventilsitz 8 in einfacher Weise umgedreht werden kann, damit eine neue Dichtungsanordnung zur Verfügung steht.

## Patentansprüche

1. Ventilanordnung mit einem Ventilgehäuse (2), das einen sich zwischen einer Einlaßöffnung (4) und einer Auslaßöffnung (5) erstreckenden Durchflußkanal (3) aufweist, und mit einer Sperreinrichtung zum Schließen des Durchflußkanals (3), die einen den Durchflußkanal (3) umgebenden Ventilsitz (8) und einen Ventilkegel (10), der in einer Axialrichtung quer zum Ventilsitz (8) zwischen einer geöffneten und einer geschlossenen Ventilstellung bewegbar ist und mit dem Ventilsitz (8) in der Weise korrespondiert, daß Dichtflächen (32, 33) an Ventilkegel (10) und Ventilsitz (8) in der geschlossenen Ventilstellung des Ventilkegels metallisch dichtend in Anlage kommen und so den Durchflußkanal (3) verschließen, aufweist, wobei zwischen Ventilsitz (8) und Ventilkegel (10) eine weichdichtende Dichtungsanordnung (34) angeordnet ist, die in der geschlossenen Ventilstellung zusätzlich zu der durch die Dichtflächen (32, 33) bewirkten metallischen Dichtung wirksam ist und ein am Ventilsitz (8) gehaltenes und als Ringscheibe ausgebildetes Dichtelement (35) aufweist, das so positioniert ist, daß der Ventilkegel (10) bei einem Schließvorgang an dem Dichtelement (35) in Anlage kommt, bevor die geschlossene Ventilstellung erreicht ist, und beim weiteren Schließvorgang das Dichtelement (35) entgegen einer elastischen Rückstellkraft in Richtung des Ventilsitzes (8) drückt, **dadurch gekennzeichnet, daß** das Dichtelement (35) aus einem eine geringe Elastizität aufweisenden Material ausgebildet ist, im Bereich seines äußeren Randes an dem Ventilsitz (8) gehalten ist und im Bereich seines inneren Randes durch wenigstens ein elastisches Element (37) am Ventilsitz (8) abgestützt ist.

2. Ventilanordnung nach Anspruch 1, **dadurch gekennzeichnet, daß** die Dichtungsanordnung (34) um die Dichtflächen (32, 33) herum angeordnet ist.

3. Ventilanordnung nach Anspruch 1 oder 2, **dadurch gekennzeichnet, daß** das Dichtelement (35) aus einem PTFE-Material besteht.

4. Ventilanordnung nach einem der Ansprüche 1 bis 3, **dadurch gekennzeichnet, daß** das elastische Element ein 0-Ring (37) aus einem Elastomermaterial ist.

5. Ventilanordnung nach einem der vorherigen Ansprüche, **dadurch gekennzeichnet, daß** der Ventilsitz t8) in eine Ausnehmung des Ventilgehäuses (2) lose eingelegt und positioniert ist und axial durch eine Spanneinrichtung (30) fixiert ist, die beim Spannen im wesentlichen nur Axialkräfte auf den Ventilsitz (8) ausübt.

6. Ventilanordnung nach Anspruch 5, **dadurch gekennzeichnet, daß** die Spanneinrichtung (30) ein Distanzelement (31), insbesondere ein durchbrochenes Distanzrohr (31), aufweist, welches im Kraftnebenschluß durch ein am Ventilgehäuse (2) anliegendes und fixiertes Bauteil (13) axial gegen den Ventilsitz (8) gedrückt wird.

7. Ventilanordnung nach Anspruch 6, **dadurch gekennzeichnet, daß** das Bauteil ein einen Stellantrieb (24) tragendes Joch (13) ist.

8. Ventilanordnung nach Anspruch 7, **dadurch gekennzeichnet, daß** das Joch (13) das Distanzelement (31) über Zwischenschaltung eines Verschlußdeckels (11), in dem der Ventilkegel (10) über eine Ventilstange (9) axial geführt ist, gegen den Ventilsitz (8) gespannt ist.

9. Ventilanordnung nach einem der vorherigen Ansprüche, **dadurch gekennzeichnet, daß** ein in die Ausnehmung (27) des Ventilgehäuses (2) eingelegtes Dichtungselement (28) den Spalt zwischen Ventilsitz (8) und Ventilgehäuse (2) abdichtet.

10. Ventilanordnung nach einem der vorherigen Ansprüche, **dadurch gekennzeichnet, daß** der Ventilsitz symmetrisch zu seiner senkrecht zur Axialrichtung (X) des Ventilkegels (10) gelegenen Mittelebene (E) ausgebildet ist.

## Claims

1. Valve assembly with a valve housing (2) having a flow-through channel (3) extending between an inlet aperture (4) and an outlet aperture (5), and with a blocking arrangement for closing the flow-through channel (3), which blocking arrangement has a valve seat (8) surrounding the flow-through channel (3) and a valve cone (10) movable in an axial direction perpendicular to the valve seat (8) between and open and a closed valve position and which corresponds to the valve seat (8) in such a way that in the closed position of the valve cone sealing faces (32, 33) on the valve cone (10) and the valve seat (8) come into metallic sealing contact and thus close the flow-through channel (3), a soft-sealing arrangement (34) being arranged between valve seat (8) and valve cone (10), which soft-sealing arrangement acts additionally to the metal seal effected by the sealing faces (32, 33) in the closed position of the valve and has an annular sealing element (35) retained to the valve seat (8), which sealing element (35) is so positioned that during closure of the valve the valve cone (10) comes into contact with the sealing element (35) before the closed position of the valve has been reached, and as the valve closure continues the sealing element (35) presses against an elastic return force in the direction of the valve seat (8), **characterised in that** the sealing element (35) is formed of a material having low elasticity, is retained to the valve seat (8) in the area of its outer edge and is supported on the valve seat (8) in the area of its inner edge by at least one elastic element (37).

2. Valve assembly according to Claim 1, **characterised in that** the sealing arrangement (34) is arranged around the sealing faces (32, 33).

3. Valve assembly according to Claim 1 or 2, **characterised in that** the sealing element (35) consists of a PTFE material.

4. Valve assembly according to one of Claims 1 to 3, **characterised in that** the elastic element is an O-ring (37) made of an elastomer material.

5. Valve assembly according to one of the preceding claims, **characterised in that** the valve seat (8) is inserted and positioned loosely in a recess in the valve housing (2) and is fixed axially by a clamping arrangement (30) which exerts substantially only axial forces on the valve seat (8) when clamping it.

6. Valve assembly according to Claim 5, **characterised in that** the clamping arrangement (30) has a distance element (31), in particular a perforated spacing tube (31), which is pressed axially against the valve seat (8) by a component (13) abutting on and fixed to the valve housing (2) in the secondary flow of forces.

7. Valve assembly according to Claim 6, **characterised in that** the component is a yoke (13) carrying an actuating drive (24).

8. Valve assembly according to Claim 7, **characterised in that** the yoke (13) is clamped against the valve seat (8) [by means of] the distance element (31) with the intermediary of a sealing cap (11) in which the valve cone (10) is axially guided by means of a valve rod (9).

9. Valve assembly according to one of the preceding claims, **characterised in that** a sealing element (28) inserted in the recess (27) of the valve housing (2) seals the gap between valve seat (8) and valve housing (2).

10. Valve assembly according to one of the preceding claims, **characterised in that** the valve seat is formed symmetrically in relation to its central plane (E) located perpendicularly to the axial direction (X) of the valve cone (10).

## Revendications

1. Ensemble de soupapes comprenant un carter de soupapes (2) qui présente un canal d'écoulement s'étendant entre un orifice d'admission (4) et un orifice d'échappement (5), et comprenant un dispositif de blocage destiné à obturer le canal d'écoulement (3), qui présente un siège de soupape (8) entourant le canal d'écoulement (3) et un cône de soupape (10) qui peut être déplacé dans une direction axiale transversalement au siège de soupape (8) entre une position de soupape ouverte et une position de soupape fermée et qui correspond au siège de soupape (8) de telle manière que des surfaces d'étanchéité (32, 33) viennent en contact métallique, de manière étanche, au niveau du cône de soupape (10) et du siège de soupape (8) dans la position de soupape fermée du cône de soupape et bloquent de cette façon le canal d'écoulement (3), un dispositif d'étanchéification à obturateur revêtu d'élastomère (34) étant disposé entre le siège de soupape (8) et le cône de soupape (10), lequel dispositif, outre l'étanchéité métallique que provoquent les surfaces d'étanchéité (32, 33), agit dans la position de soupape fermée, et présente un élément d'étanchéité (35) maintenu au niveau du siège de soupape (8) et conçu sous forme de disque annulaire, lequel élément est positionné de telle sorte que le cône de soupape (10) vienne en contact avec l'élément d'étanchéité (35), au cours d'un processus de fermeture, avant d'atteindre la position de soupape fermée, et de telle sorte que l'élément d'étanchéité (35) exerce une pression contre une force élastique de rappel en direction du siège de soupape (8), **caractérisé en ce que** l'élément d'étanchéité (35) est formé à partir d'un matériau qui présente une faible élasticité, en ce qu'il est maintenu, dans la région de son bord extérieur, au niveau du siège de soupape et en ce qu'il est soutenu, dans la région de son bord intérieur, par au moins un élément élastique (37) au niveau du siège de soupape (8).

2. Ensemble de soupapes selon la revendication 1, **caractérisé en ce que** le dispositif d'étanchéification (34) est disposé autour des surfaces d'étanchéité (32, 33).

3. Ensemble de soupapes selon la revendication 1 ou 2, **caractérisé en ce que** l'élément d'étanchéité (35) est composé d'un matériau en polytétrafluoréthylène.

4. Ensemble de soupapes selon l'une quelconque des revendications 1 à 3, **caractérisé en ce que** l'élément élastique est un anneau torique (37) fabriqué à partir d'un matériau élastomère.

5. Ensemble de soupapes selon l'une quelconque des revendications précédentes, **caractérisé en ce que** le siège de soupape (8) est inséré et positionné de manière amovible dans un creux du carter de soupapes (2) et est axialement fixé par l'intermédiaire d'un dispositif de serrage (30) qui, lors du serrage, n'exerce pour l'essentiel que des forces axiales sur le siège de soupape (8).

6. Ensemble de soupapes selon la revendication 5, **caractérisé en ce que** le dispositif de serrage (30) présente un élément d'écartement (31), notamment une entretoise tubulaire percée qui fait l'objet d'une poussée axiale, contre le siège de soupape (8), imprimée par une force en dérivation générée par un composant (13) reposant et fixé sur le carter de soupapes (2).

7. Ensemble de soupapes selon la revendication 6, **caractérisé en ce que** l'élément est une culasse (13) supportant un servomoteur (24).

8. Ensemble de soupapes selon la revendication 7, **caractérisé en ce que** la culasse (13) serre l'élément d'écartement (31) contre le siège de soupape (8) par intercalage d'un couvercle de fermeture (11) dans lequel le cône de soupape (10) est guidé de manière axiale par une bielle de soupape (9).

9. Ensemble de soupapes selon l'une quelconque des revendications précédentes, **caractérisé en ce qu'**un élément d'étanchéité (28) inséré dans le creux (27) du carter de soupape (2) étanchéifie la fente qui existe entre le siège de soupape (8) et le carter de soupape (2).

10. Ensemble de soupapes selon l'une quelconque des revendications précédentes, **caractérisé en ce que** le siège de soupape est conçu de manière symétrique par rapport à son plan médian (E) placé perpendiculairement à la direction axiale (X) du cône de soupape (10).
